# EUROPEAN PATENT SPECIFICATION

(11) **EP 2 906 336 B1**
(45) Date of publication and mention of the grant of the patent: **21.12.2016**
(21) Application number: 13812129.8
(22) Date of filing: 15.10.2013
(51) Int. Cl.: B01J 2/04, C05C 9/00

(54) **PRILLING TOWER AND PROCESS, IN PARTICULAR FOR PRODUCING UREA**
PRILLTURM UND VERFAHREN, INSBESONDERE ZUR HERSTELLUNG VON HARNSTOFF
TOUR DE GRANULATION ET PROCÉDÉ ASSOCIÉ, EN PARTICULIER POUR PRODUIRE DE L'URÉE

(30) Priority: 15.10.2012 IT MI20121733
(43) Date of publication of application: 19.08.2015
(73) Proprietor: Saipem S.p.A., San Donato Milanese (IT)
(72) Inventor: BIN, Luo, Hefei 230022 (CN); ZHONGPING, Xie, Hefei 230022 (CN); HUIXUN, Ling, Hefei 230022 (CN); CARLESSI, Lino, I-24044 Dalmine (IT)
(74) Representative: Cernuzzi, Daniele
(86) International application number: PCT/IB2013/059373
(87) International publication number: WO 2014/060951

(56) References cited:
- WO-A1-01/81450
- DE-B- 1 230 402

## Description

### TECHNICAL FIELD

The present invention relates to a prilling tower and to a prilling process, in particular for producing urea.

The term prilling (or pelletization) indicates a method for solidifying a substance starting from a liquid phase thereof. The operation is normally performed in a prilling tower: the liquid phase (generally concentrated and hot) is sprayed at the top of the tower, while air (normally at ambient temperature) is supplied into the bottom of the tower, and rises in countercurrent flow to the liquid phase, causing the formation of generically spherical agglomerated particles ("prills") typically with a diameter of a few millimetres.

A typical application of prilling is in the production of urea.

### BACKGROUND ART

As it is known, urea is produced on industrial scale through processes based on the reaction between carbon dioxide and ammonia in the form of ammonium carbamate, and on the subsequent decomposition reaction of the ammonium carbamate to supply urea and water.

The final product, solid urea, is generally obtained by solidification, and in particular by means of prilling or, alternatively by means of granulation processes.

In general, the solidification methods influence the geometric characteristics of the final product: in fact, both with granulation and with prilling, generically rounded particles are obtained, but in the first case (granulation) granules of greater dimensions and thickness are obtained, while in the second (prilling) particles ("prills") of smaller dimensions and thickness are obtained. The quality of the final product is generally good for both types of process, but prilling nonetheless remains the simpler technology applied to produce solid urea with the chemical-physical properties required commercially.

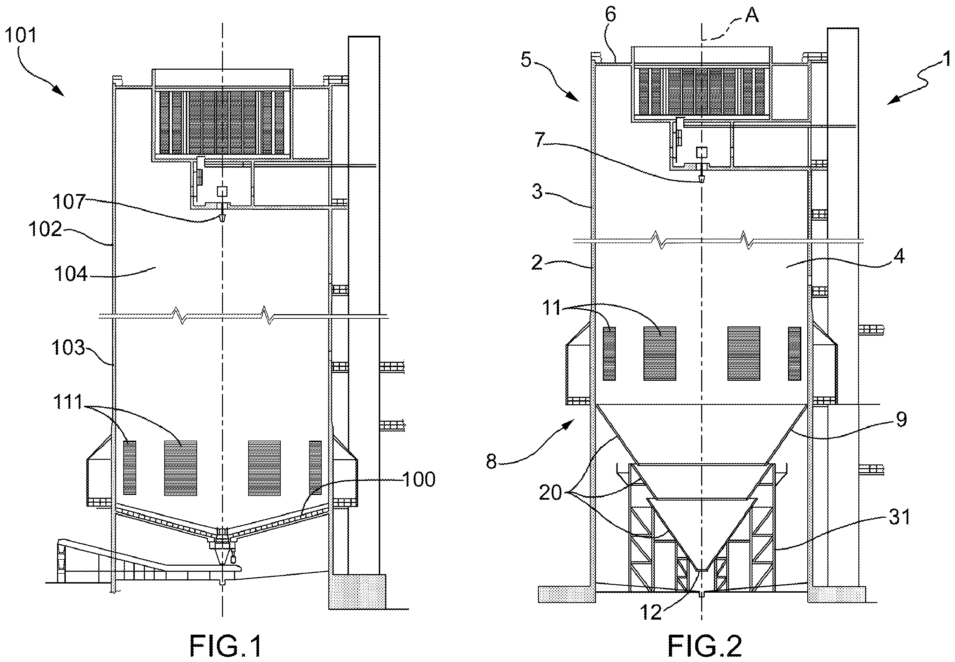

A typical prilling tower of known type is shown schematically in the accompanying Fig. 1, where it is indicated as a whole with the reference number 101; the prilling tower 101 comprises: a casing 102 delimiting a treatment chamber 104; a sprayer device 107 arranged at a top end of the casing 102 for supplying a liquid phase (molten urea) in the treatment chamber 104; adjustable windows 111, formed through a lateral wall 103 of the casing 102 at a bottom end of the casing for supplying air inside the treatment chamber 104; a mechanical scraper device 100, arranged at the bottom end of the casing 102 to move the solid product collected on the bottom of the tower 101 toward an outlet opening.

The liquid phase (molten urea) is sprayed at the top of the prilling tower 101 (at a height of several tens of meters), on the bottom of which air is supplied, through the windows 111, at ambient temperature and humidity, and which rises in countercurrent flow to the liquid phase and causes the formation of urea particles or prills; the prills, once solidified and cooled, are collected on the bottom of the tower 101, picked up by means of a conveyor belt and collected in bags, usually without particular steps in finishing or post-treatment sections.

Commonly, the process implemented in the prilling tower includes a wash step, the purpose of which is to eliminate urea deposits that form on the walls of the prilling tower and which would prevent a final product of optimal quality from being obtained; the water containing urea used for washing is collected and returned to the urea forming sections. In certain cases, an anti-caking agent is added to the molten urea before the prilling process to prevent caking of the product during storage.

Although the prilling process is essentially simple, it nonetheless has some technical problems:
- phenomenon of caking: due to the use of the scraper and to the presence of humidity (contained both in the air for cooling and in the urea still in molten state);
- presence of friction between scraper and the bottom of the tower, with consequent abrasion of the urea produced;
- energy consumption for operation of the scraper.

Although prior art systems are generally satisfactory, they still seem to have margins for improvement, in particular in terms of quality of the urea produced, energy consumption and overall efficiency.

### DISCLOSURE OF THE INVENTION

An object of the present invention is to provide a prilling tower and process, in particular for producing urea, which enables the overall efficiency and the quality of the final product to be improved.

The present invention therefore relates to a prilling tower and process, in particular for producing urea, as defined in essential terms in the appended claims 1 and, respectively, 11.

Additional preferred characteristics of the invention are indicated in the dependent claims.

In accordance with the invention, the prilling tower is provided, in the bottom part thereof, with a funnel-shaped conveying structure formed by several sectors and has no mechanical scraper; with respect to conventional solutions with scraper, the invention thus enables elimination of problems related to the use of the scraper, both in terms of friction and of mechanical nature; this solution, together with the increase of the effective height resulting from the introduction of a funnel-shaped structure with several sectors (with consequent increased quantity of air supplied), ultimately enables improvement of the final quality of the product and of production efficiency.

In particular, the conveying structure arranged on the bottom of the prilling tower in accordance with the invention enables improvement of the dimensional distribution of the urea prills produced (which must have specific dimensions for subsequent marketing), due to the fact that the new configuration enables:
- elimination of friction between the scraper (which is no longer used) and the bottom of the prilling tower;
- elimination of mechanical defects of the scraper;
- elimination of all energy costs related to the use of the scraper, thus contributing to reducing the overall costs of urea production.

Moreover, the conveying structure enables an increase in the inflow of air in the tower, further improving the prilling process; in fact, the free spaces between the various sectors forming the funnel-shaped conveying structure can also be advantageously used for supplying air.

### BRIEF DESCRIPTION OF THE DRAWINGS

Further characteristics and advantages of the present invention will be more apparent from the description below of a non-limiting example of embodiment, with reference to the figures in the accompanying drawings, wherein:
- Fig. 1 is a schematic longitudinal sectional view of a prilling tower in accordance with the prior art;
- Fig. 2 is a schematic longitudinal sectional view of a prilling tower in accordance with the invention;
- Fig. 3 is a view on an enlarged scale of a detail of the prilling tower of Fig. 2.

### BEST MODE FOR CARRYING OUT THE INVENTION

A prior art prilling tower, illustrated in Fig. 1, has been briefly described above.

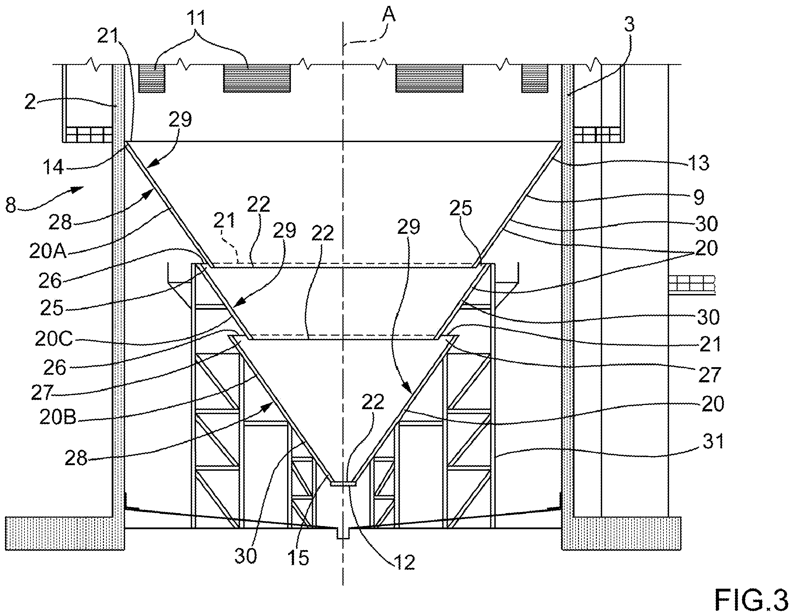

A prilling tower 1 in accordance with the invention is instead shown in Figs. 2 and 3.

The prilling tower 1 of the invention comprises a casing 2 extending along and about a longitudinal vertical axis A; the casing 2 has, for example, a substantially circular or polygonal cross section and has a lateral wall 3 around the axis A delimiting a treatment chamber 4.

The casing 2 extends between a top axial end 5, provided with a covering structure 6 connected to the lateral wall 3 and with a sprayer device 7 for supplying a liquid phase (molten urea) in the treatment chamber 4, and a bottom axial end 8, provided with a conveying structure 9.

The lateral wall 3 is provided with a plurality of adjustable windows 11, for example provided with shutter type adjustable slants, angularly spaced from one another and arranged at the bottom axial end 8 of the casing 2.

The conveying structure 9 is set below the windows 11 and is configured so as to collect the solid material produced in the treatment chamber 4 in the form of prills and convey it toward a bottom outlet 12.

With specific reference to Fig. 3, the conveying structure 9 also extends along and about the axis A between a top end 13, having an end edge 15 joined to the lateral wall 3, and a bottom edge 15, provided with a central opening defining the bottom outlet 12.

The conveying structure 9 is generically funnel-shaped and narrows towards the bottom and towards the axis A from the lateral wall 3 to the bottom outlet 12.

The conveying structure 9 comprises a plurality of flared sectors 20, coaxial and aligned along the axis A; the sectors 20 are arranged in series along the axis A and converging towards the bottom end 15 of the conveying structure 9.

The sectors 20 have, for example, a frustoconical shape or a polygonal-base truncated pyramid shape, optionally also according to the shape of the cross section of the casing 2.

The sectors 20 in any case narrow towards the bottom and towards the axis A.

Each sector 20 has a top peripheral edge 21 and a bottom peripheral edge 22, arranged at respective axially opposite ends of the sector; the top peripheral edge 21 delimits a cross section of greater area than the bottom peripheral edge, i.e. the top peripheral edge 21 has a diameter or equivalent diameter (diameter that a circular section with the same area would have) greater than the bottom peripheral edge 22.

The sectors 20 are partially inserted inside each other both axially (along the axis A) and radially (crosswise to the axis A).

In particular, each pair of consecutive sectors 20 along the axis A is formed by two sectors 20 having respective peripheral edges 21, 22 inserted inside each other; the upper sector 20 of the pair, arranged above the other along the axis A, has the bottom peripheral edge 22 which is arranged below, along the axis A, the top peripheral edge 21 of the sector 20 beneath, arranged below, and radially inside, the sector that precedes.

The peripheral edges 21, 22 inserted inside each other of two consecutive sectors 20 do not contact directly, but are axially staggered and radially spaced apart from each other, so as to define an annular slot 25 about the axis A between the two sectors 20 of the pair; the slot has an access opening 26 which is perpendicular to the axis A. Each sector 20 is thus separated from the sector 20 that follows along the axis A by an annular gap 27, defining a slot 25.

For each pair of consecutive sectors 20, the gap 27 is delimited by an outer lateral surface 28 of the upper sector 20 and by an inner lateral surface 29 of the lower sector 20, facing each other and radially spaced apart from each other.

In particular, the conveying structure 9 comprises a top sector 20A, set at the top end 13 of the conveying structure 9, a bottom sector 20B, set at the bottom end 15 of the conveying structure 9, and at least one intermediate sector 20C arranged between the top sector 20A and the bottom sector 20B.

The conveying structure 9 can optionally include two or more intermediate sectors 20C, arranged one inside the other between the top sector 20A and the bottom sector 20B. The top sector 20A and the intermediate sector 20C (or each intermediate sector 20C, if more than one) have respective bottom peripheral edges 22 which are circumscribed by the top peripheral edge 21 of the sector 20 that follows along the axis A; in other words, the bottom peripheral edge 22 of the top sector 20A and of the intermediate sector 20C (or of each intermediate sector 20C) is arranged axially below and radially inside the top peripheral edge 21 of the sector 20 that follows, set farther down.

Therefore, in general each sector 20 (with the exception of the bottom sector 20B) extends inside the sector 20 that follows (arranged immediately below along the axis A) and has its bottom peripheral edge 22 which is arranged radially and axially inside the sector 20 that follows and precisely inside the top peripheral edge 21 of the sector 20 that follows.

The top peripheral edge 21 of the top sector 20A is joined to the lateral wall 3 of the casing 2, while the bottom peripheral edge 22 of the bottom sector 20B delimits the bottom outlet 12.

Each sector 20 has a lateral wall 30 arranged about the axis A and slanted with respect to the axis A, in particular downwards and towards the axis A.

Preferably, but not necessarily, the lateral walls 30 of the sectors 20, and in particular the inner lateral surfaces 29 thereof, all have the same inclination with respect to the axis A and to a horizontal plane (perpendicular to the axis A); in particular, the lateral walls 30 and/or at least the inner lateral surfaces 29 of the sectors 20 have an inclination with respect to a horizontal plane greater than 45° and preferably greater than 50°, for example about 55°. The lateral walls 30 and/or at least the inner lateral surfaces 29 of the sectors 20 have an inclination with respect to the axis A between about 30° and about 40°, for example about 35°.

The conveying structure 9 is supported by a frame 31 which supports, in particular, at least some sectors 20 in a predetermined spatial position with respect to one another. The conveying structure 9 has no mechanical scrapers: the inner lateral surfaces 29 are in fact slanted so as to cause the prills, deposited on the inner lateral surfaces 29, to slide for the sole effect of gravity towards the bottom outlet 12. The configuration of the sectors 20, and in particular the inclination of the inner lateral surfaces 29, thus ensures that the prills that form in the treatment chamber 4 fall onto the sectors 20, slide along the inner lateral surfaces 29 of the sectors 20 up to the bottom outlet 12, without requiring mechanical operations.

In use, in implementation of the process in accordance with the invention, the liquid phase (molten urea) is sprayed at the top of the tower 1, into the treatment chamber 4, by means of the spraying device 7, while air (at ambient temperature and humidity) is inserted in countercurrent flow into the treatment chamber 4 through the windows 11.

A supplementary flow of air is supplied through the slots 25, i.e through the gaps 27.

While the air rises in the treatment chamber 4 in countercurrent flow to the descending liquid phase, the liquid phase solidifies and prills form, falling onto the inner lateral surfaces 29 of the sectors 20 and sliding thereon up to the bottom outlet 12.

Finally, it is understood that further modifications and variants can be made to the prilling tower and process described herein, without departing from the scope of the appended claims.

## Claims

1. A prilling tower (1) for producing urea, comprising: a casing (2) extending along and about an axis (A) and provided with an inner treatment chamber (4); a sprayer device (7) arranged at a top axial end (5) of the casing (2) for supplying a liquid phase of molten urea in the chamber (4); windows (11) set at a bottom axial end (8) of the casing (2) for supplying air inside the chamber (4); and a conveying structure (9) arranged at the bottom axial end (8) of the casing (2) below the windows (21) for collecting a solid product formed in the chamber (4) in form of prills and conveying said prills towards a bottom outlet (12); the conveying structure (9) comprising a plurality of flared sectors (20), coaxial and aligned to one another along the axis (A) and arranged in series along the axis (A) and converging downwards and towards the axis (A) the conveying structure (9) comprises a top sector (20A), set at the top end (13) of the conveying structure (9), a bottom sector (20B), set at the bottom end (15) of the conveying structure (9), and at least one intermediate sector (20C) arranged between the top sector (20A) and the bottom sector (20B); the prilling tower being **characterized in that** the conveying structure (9) has no mechanical scrapers and the sectors (20) are partially inserted inside one another both axially and radially and each pair of sectors (20) consecutive along the axis (A) is formed by two sectors (20) having respective peripheral edges (21, 22) inserted one inside the other; the upper sector (20) of the pair, arranged above the other along the axis (A), having a peripheral bottom edge (22) arranged below and radially inside a top peripheral edge (21) of the sector (20) beneath; the sectors having respective inner lateral surfaces (29) slanted so as to cause the prills, deposited on the inner lateral surfaces (29), to slide for the sole effect of gravity towards the bottom outlet (12), the sectors (20) having respective lateral walls (30) having an inclination with respect to a horizontal plane greater than 45°.

2. A prilling tower according to claim 1, wherein each sector (20) is separated from the sector (20) that follows along the axis (A) by an annular gap (27).

3. A prilling tower according to claim 2, wherein for each pair of sectors (20) consecutive along the axis (A), the gap (27) is delimited by an outer lateral surface (28) of an upper sector (20) of the pair and by an inner lateral surface (29) of a lower sector (20) of the pair, facing each other and radially spaced apart from each other.

4. A prilling tower according to claim 1, wherein the peripheral edges (21, 22) inserted inside each other of two consecutive sectors (20) do not contact directly, but are axially staggered and radially spaced apart from each other, so as to define an annular slot (25) about the axis (A) between the two sectors (20) of the pair.

5. A prilling tower according to claim 4, wherein the slot (25) has an access opening (26) which is perpendicular to the axis (A).

6. A prilling tower according to one of the preceding claims, wherein the sectors (20) have respective lateral walls (30) set about the axis (A) and slanted with respect to the axis (A) downwards and towards the axis (A) ; and wherein all the lateral walls (30) of the sectors (20) have the same inclination with respect to the axis (A) and to a horizontal plane perpendicular to the axis (A).

7. A prilling tower according to one of the preceding claims, wherein the sectors (20) have respective lateral walls (30) having an inclination with respect to a horizontal plane greater than 50°, for example about 55°.

8. A prilling tower according to one of the preceding claims, wherein the sectors (20) have respective lateral walls (30) having an inclination with respect to the axis (A) ranging between about 30° and about 40°, for example about 35°.

9. A prilling tower according to one of the preceding claims, wherein the sectors (20) have a frustoconical shape or a polygonal-base truncated pyramid shape.

10. A prilling process for producing urea, comprising the steps of: introducing a liquid phase of molten urea at a top axial end (5) of a prilling tower (1); supplying air at a bottom axial end (8) of the prilling tower through windows (11) arranged at said bottom axial end (8); contacting the liquid phase in countercurrent flow with the air to solidify the liquid phase and form prills; collecting the prills on a conveying structure (9) set at the bottom axial end (8) of the prilling tower (1) below the windows (11); the process being **characterised in that** the conveying structure (9) comprises a plurality of flared sectors (20), coaxial and aligned to one another along the axis (A) and arranged in series along the axis (A) and converging towards the axis (A) and towards a bottom end (15) of the conveying structure (9) provided with a bottom outlet (12); the conveying structure (9) comprising a top sector (20A), set at the top end (13) of the conveying structure (9), a bottom sector (20B), set at the bottom end (15) of the conveying structure (9), and at least one intermediate sector (20C) arranged between the top sector (20A) and the bottom sector (20B); the sectors (20) being partially inserted inside one another both axially and radially and each pair of sectors (20) consecutive along the axis (A) being formed by two sectors (20) having respective peripheral edges (21, 22) inserted one inside the other; the upper sector (20) of the pair, arranged above the other along the axis (A), having a peripheral bottom edge (22) arranged below and radially inside a top peripheral edge (21) of the sector (20) beneath; the sectors (20) having respective inner lateral surfaces (29) slanted so as to cause the prills, deposited on the inner lateral surfaces (29), to slide for the sole effect of gravity towards the bottom outlet (12); the sectors (20) having respective lateral walls (30) having an inclination with respect to a horizontal plane greater than 45°; and **in that** the prills are collected on said inner lateral surfaces (29) of the sectors (20) and hence slide on them up to the bottom outlet (12) without the aid of mechanical scraper devices.

11. A prilling process according to claim 10, wherein each sector (20) is separated from the sector (20) that follows along the axis (A) by an annular gap (27) which defines a slot (25), and the process comprises a step of supplying a supplementary air flow through one or more said slots (25).

12. A prilling process according to claim 11, wherein for each pair of sectors (20) consecutive along the axis (A), the gap (27) is delimited by an outer lateral surface (28) of an upper sector (20) of the pair and by an inner lateral surface (29) of a lower sector (20) of the pair, facing each other and radially spaced apart from each other.

13. A prilling process according to one of claims 10 to 12, wherein the peripheral edges (21, 22) inserted inside each other of two consecutive sectors (20) do not contact directly, but are axially staggered and radially spaced apart from each other, so as to define an annular slot (25) about the axis (A) between the two sectors (20) of the pair.

14. A prilling process according to claim 13, wherein the slot (25) has an access opening (26) which is perpendicular to the axis (A).

15. A prilling process according to one of claims 10 to 14, wherein the sectors (20) have respective lateral walls (30) set about the axis (A) and slanted with respect to the axis (A) downwards and towards the axis (A); and wherein all the lateral walls (30) of the sectors (20) have the same inclination with respect to the axis (A) and to a horizontal plane perpendicular to the axis (A).

16. A prilling process according to one of claims 10 to 15, wherein the sectors (20) have respective lateral walls (30) having an inclination with respect to a horizontal plane greater than 50°, for example about 55°.

17. A prilling process according to one of claims 10 to 16, wherein the sectors (20) have respective lateral walls (30) having an inclination with respect to the axis (A) ranging between about 30° and about 40°, for example about 35°.

18. A prilling process according to one of claims 10 to 17, wherein the sectors (20) have a frusto-conical shape or a polygonal-base truncated pyramid shape.

## Patentansprüche

1. Prillturm (1) zur Herstellung von Harnstoff umfassend: Ein entlang und um eine Achse (A) verlaufendes Gehäuse (2), das mit einer inneren Behandlungskammer (4) versehen ist; eine an einem oberen axialen Ende (5) des Gehäuses (2) angeordnete Sprühvorrichtung (7) zur Zufuhr einer flüssigen Phase geschmolzenen Harnstoffs in die Kammer (4); an einem unteren axialen Ende (8) des Gehäuses (2) angebrachte Fenster (11) zur Zufuhr von Luft in die Kammer (4); und eine an dem unteren axialen Ende (8) des Gehäuses (2) unterhalb der Fenster (11) angeordnete Förderstruktur (9) zum Sammeln eines in der Kammer (4) ausgebildeten festen Produkts in Form von Prills und Befördern der Prills zu einem Bodenauslass (12); wobei die Förderstruktur (9) eine Vielzahl erweiterter Sektoren (20) umfasst, die koaxial und entlang der Achse (A) zueinander ausgerichtet und in Reihe entlang der Achse (A) angeordnet sind und nach unten und in Richtung der Achse (A) zusammenlaufen; wobei die Förderstruktur (9) einen oberen Sektor (20a), angebracht an dem oberen Ende (13) der Förderstruktur (9), einen unteren Sektor (20b), angebracht an dem unteren Ende (15) der Förderstruktur (9), und mindestens einen zwischen dem oberen Sektor (20a) und dem unteren Sektor (20b) angeordneten Zwischensektor (20c) umfasst; wobei der Prillturm **dadurch gekennzeichnet ist, dass** die Förderstruktur (9) keine mechanischen Abstreifer aufweist und dass die Sektoren (20) sowohl axial wie auch radial teilweise ineinander eingesetzt sind und dass jedes entlang der Achse (A) aufeinanderfolgende Paar Sektoren (20) durch zwei Sektoren (20) mit jeweils ineinander gesetzten umfangsseitigen Kanten (21, 22) geformt ist; wobei der entlang der Achse (A) oberhalb des anderen angeordnete obere Sektor (20) des Paares eine umfangsseitige untere Kante (22) aufweist, die unterhalb und radial innerhalb einer oberen umfangsseitigen Kante (21) des darunter liegenden Sektors (20) angeordnet ist; wobei die Sektoren innere laterale Oberflächen (29) aufweisen, die derart geneigt sind, dass auf die inneren lateralen Oberflächen (29) auftreffende Prills lediglich durch die Gravitation in Richtung des unteren Auslasses (12) gleiten, wobei die Sektoren (20) jeweils Seitenwände (30) mit einer Inklination von größer 45° gegenüber einer horizontalen Ebene aufweisen.

2. Prillturm nach Anspruch 1, wobei jeder Sektor (20) von dem entlang der Achse (A) folgenden Sektor (20) durch einen Ringspalt (27) getrennt ist.

3. Prillturm nach Anspruch 2, wobei für jedes entlang der Achse (A) aufeinander folgende Paar Sektoren (20) der Spalt (27) begrenzt ist durch eine äußere laterale Oberfläche (28) eines oberen Sektors (20) des Paares und durch eine innere laterale Oberfläche (29) eines unteren Sektors (20) des Paars, die einander zugewandt und radial voneinander beabstandet sind.

4. Prillturm nach Anspruch 1, wobei die ineinander eingesetzten umfangsseitigen Kanten (21, 22) der aufeinanderfolgenden Sektoren (20) einander nicht unmittelbar berühren, sondern axial versetzt und radial voneinander beabstandet sind, sodass sie einen um die Achse (A) verlaufenden ringförmigen Schlitz (25) zwischen den beiden Sektoren (20) des Paares bilden.

5. Prillturm nach Anspruch 4, wobei der Schlitz (25) eine zu der Achse (A) senkrechte Zugangsöffnung (26) aufweist.

6. Prillturm nach einem der vorhergehenden Ansprüche, wobei die Sektoren (20) jeweils um die Achse (A) und gegenüber der Achse (A) nach unten und in Richtung der Achse (A) geneigte Seitenwände (30) aufweisen; und wobei alle Seitenwände (30) der Sektoren (20) gegenüber der Achse (A) und gegenüber einer senkrecht zu der Achse (A) angeordneten horizontalen Ebene die gleiche Inklination aufweisen.

7. Prillturm nach einem der vorhergehenden Ansprüche, wobei die Sektoren (20) jeweils Seitenwände (30) mit einer Inklination größer als 50°, beispielsweise ungefähr 55°, gegenüber der horizontalen Ebene aufweisen.

8. Prillturm nach einem der vorhergehenden Ansprüche, wobei die Sektoren (20) jeweils Seitenwände (30) mit einer Inklination gegenüber der Achse (A) im Bereich von ungefähr 30° bis ungefähr 40°, beispielsweise ungefähr 35°, aufweisen.

9. Prillturm nach einem der vorhergehenden Ansprüche, wobei die Sektoren eine Kegelstumpfform oder eine polygonal basierte Pyramidenstumpfform aufweisen.

10. Prillverfahren zur Herstellung von Harnstoff, umfassend die Schritte: Einführen einer flüssigen Phase geschmolzenen Harnstoffs an einem oberen axialen Ende (5) eines Prillturms (1); Zuführen von Luft an einem unteren axialen Ende (8) des Prillturms durch an dem unteren axialen Ende (8) angeordnete Fenster (11); Kontaktnahme der flüssigen Phase in einem Gegenstrom mit der Luft zum Erstarren der flüssigen Phase und der Bildung von Prills; Einsammeln der Prills auf einer Förderstruktur (9), die an dem unteren axialen Ende (8) des Prillturms (1) unterhalb der Fenster (11) angebracht ist; wobei das Verfahren **dadurch gekennzeichnet ist, dass** die Förderstruktur (9) eine Vielzahl geneigter Sektoren (20) aufweist, die koaxial und entlang der Achse (A) ausgerichtet und in Reihe entlang der Achse (A) angeordnet sind und die in Richtung der Achse (A) und in Richtung eines unteren Endes (15) der mit einem unteren Auslass (12) versehenen Förderstruktur (9) zusammenlaufen; wobei die Förderstruktur (9) einen oberen Sektor (20a), der an einem oberen Ende (13) der Förderstruktur (9) angebracht ist, einen unteren Sektor (20b), der an einem unteren Ende (15) der Förderstruktur (9) angebracht ist, und mindestens einen zwischen dem oberen Sektor (20a) und dem unteren Sektor (20b) angeordneten Zwischensektor (20c) umfasst; wobei die Sektoren (20) sowohl axial wie auch radial teilweise ineinander eingesetzt sind und jedes entlang der Achse (A) aufeinanderfolgende Paar von Sektoren (20) durch zwei Sektoren (20) gebildet ist, die jeweils ineinander eingesetzte umfangsseitige Kanten (21, 22) aufweisen; wobei der obere Sektor (20) des Paares oberhalb des anderen entlang der Achse (A) angeordnet ist und eine umlaufende Bodenkante (22) aufweist, die unterhalb und radial innerhalb einer oberen umlaufenden Kante (21) des unteren Sektors (20) angeordnet ist; wobei die Sektoren (20) jeweils innere laterale Oberflächen (29) aufweisen, die derart geneigt sind, dass auf die inneren lateralen Oberflächen (29) auftreffende Prills lediglich durch die Gravitation in Richtung des Bodenauslasses (12) gleiten; wobei die Sektoren (20) jeweils Seitenwände (30) mit einer Inklination von größer 45° gegenüber einer horizontalen Ebene aufweisen; und wobei die Prills auf den inneren lateralen Oberflächen (29) der Sektoren (20) gesammelt werden und somit auf diesen bis zum Bodenauslass (12) ohne die Hilfe mechanischer Abstreifvorrichtungen gleiten.

11. Prillverfahren nach Anspruch 10, wobei jeder Sektor (20) von dem entlang der Achse (A) folgenden Sektor (20) durch einen Ringspalt (27) getrennt ist, der einen Schlitz (25) bildet und wobei das Verfahren den Schritt der Zufuhr eines unterstützenden Luftflusses durch einen oder mehrere der Schlitze (25) umfasst.

12. Prillverfahren nach Anspruch 11, wobei für jedes entlang der Achse (A) aufeinanderfolgende Paar von Sektoren (20) der Spalt (27) begrenzt ist durch eine äußere laterale Oberfläche (28) eines oberen Sektors (20) des Paares und durch eine innere laterale Oberfläche (29) eines unteren Sektors (20) des Paares die einander zugewandt und voneinander radial beabstandet sind.

13. Prillverfahren nach einem der Ansprüche 10 bis 12, wobei die umfangsseitigen Kanten (21, 22) der beiden aufeinanderfolgenden, ineinander gesetzten Sektoren (20) einander nicht unmittelbar berühren, sondern axial versetzt und radial beabstandet voneinander sind, sodass um die Achse (A) zwischen den Sektoren (20) des Paares ein umlaufender Schlitz (25) gebildet wird.

14. Prillverfahren nach Anspruch 13, wobei der Schlitz (25) eine zu der Achse (A) senkrechte Zugangsöffnung (26) aufweist.

15. Prillverfahren nach einem der Ansprüche 10 bis 14, wobei die Sektoren (20) jeweils Seitenwände (30) aufweisen, die um die Achse (A) angebracht und gegenüber der Achse (A) und in Richtung der Achse (A) geneigt sind; und wobei alle Seitenwände (30) der Sektoren (20) die gleiche Inklination gegenüber der Achse (A) und gegenüber einer zu der Achse (A) senkrechten horizontalen Ebene aufweisen.

16. Prillverfahren nach einem der Ansprüche 10 bis 15, wobei die Sektoren (20) jeweils Seitenwände mit einer Inklination von größer 50°, beispielsweise ungefähr 55°, gegenüber der horizontalen Ebene aufweisen.

17. Prillverfahren nach einem der Ansprüche 10 bis 16, wobei die Sektoren (20) jeweils Seitenwände (30) mit einer Inklination zwischen ungefähr 30° und ungefähr 40°, beispielsweise ungefähr 35°, gegenüber der Achse (A) aufweisen.

18. Prillverfahren nach einem der Ansprüche 10 bis 17, wobei die Sektoren (20) eine Kegelstumpfform oder eine polygonalbasierte stumpfartige Pyramidenform aufweisen.

## Revendications

1. Tour de granulation (1) pour produire de l'urée, comprenant : une enveloppe (2) s'étendant le long et autour d'un axe (A) et prévue avec une chambre de traitement interne (4) ; un dispositif de pulvérisateur (7) agencé au niveau d'une extrémité axiale supérieure (5) de l'enveloppe (2) pour fournir une phase liquide d'urée en fusion dans la chambre (4) ; des fenêtres (11) placées au niveau d'une extrémité axiale inférieure (8) de l'enveloppe (2) pour fournir l'air à l'intérieur de la chambre (4) ; et une structure de transport (9) agencée au niveau de l'extrémité axiale inférieure (8) de l'enveloppe (2) au-dessous des fenêtres (11) pour collecter un produit solide formé dans la chambre (4) sous forme de granulés et transporter lesdits granulés vers une sortie inférieure (12) ; la structure de transport (9) comprenant une pluralité de secteurs évasés (20), coaxiaux et alignés les uns aux autres le long de l'axe (A) et agencés en série le long de l'axe (A) et convergeant vers le bas et vers l'axe (A), la structure de transport (9) comprend un secteur supérieur (20A) placé au niveau de l'extrémité supérieure (13) de la structure de transport (9), un secteur inférieur (20B) placé au niveau de l'extrémité inférieure (15) de la structure de transport (9) et au moins un secteur intermédiaire (20C) agencé entre le secteur supérieur (20A) et le secteur inférieur (20B) ; la tour de granulation étant **caractérisée en ce que** la structure de transport (9) n'a pas de racloirs mécaniques et les secteurs (20) sont partiellement insérés les uns à l'intérieur des autres, à la fois axialement et radialement et chaque paire de secteurs (20) consécutive le long de l'axe (A) est formée par deux secteurs (20) ayant des bords périphériques (21, 22) respectifs insérés les uns à l'intérieur des autres ; le secteur supérieur (20) de la paire, agencé au-dessus de l'autre le long de l'axe (A) ayant un bord inférieur périphérique (22) agencé au-dessous et radialement à l'intérieur d'un bord périphérique supérieur (21) du secteur (20) au-dessous, les secteurs ayant des surfaces latérales internes (29) respectives inclinées pour amener les granulés, déposés sur les surfaces latérales internes (29), à coulisser sous le seul effet de la gravité vers la sortie inférieure (12), les secteurs (20) ayant des parois latérales (30) respectives ayant une inclinaison par rapport à un plan horizontal supérieur à 45°.

2. Tour de granulation selon la revendication 1, dans laquelle chaque secteur (20) est séparé du secteur (20) suivant le long de l'axe (A) par un espace annulaire (27).

3. Tour de granulation selon la revendication 2, dans laquelle pour chaque paire de secteurs (20) consécutive le long de l'axe (A), l'espace (27) est délimité par une surface latérale interne (28) d'un secteur supérieur (20) de la paire et par une surface latérale interne (29) d'un secteur inférieur (20) de la paire, se faisant face et radialement espacées l'une de l'autre.

4. Tour de granulation selon la revendication 1, dans laquelle les bords périphériques (21, 22) insérés les uns à l'intérieur des autres des deux secteurs (20) consécutifs ne sont pas en contact direct, mais sont axialement en quinconce et radialement espacés l'un de l'autre, afin de définir une fente annulaire (25) autour de l'axe (A) entre les deux secteurs (20) de la paire.

5. Tour de granulation selon la revendication 4, dans laquelle la fente (25) a une ouverture d'accès (26) qui est perpendiculaire à l'axe (A).

6. Tour de granulation selon l'une des revendications précédentes, dans laquelle les secteurs (20) ont des parois latérales (30) respectives placées autour de l'axe (A) et inclinées par rapport à l'axe (A) vers le bas et vers l'axe (A) ; et dans laquelle toutes les parois latérales (30) des secteurs (20) ont la même inclinaison par rapport à l'axe (A) et à un plan horizontal perpendiculaire à l'axe (A).

7. Tour de granulation selon l'une des revendications précédentes, dans laquelle les secteurs (20) ont des parois latérales (30) respectives ayant une inclinaison par rapport à un plan horizontal supérieur à 50°, par exemple environ 55°.

8. Tour de granulation selon l'une des revendications précédentes, dans laquelle les secteurs (20) ont des parois latérales respectives (30) ayant une inclinaison par rapport à l'axe (A) compris entre environ 30° et environ 40°, par exemple environ 35°.

9. Tour de granulation selon l'une des revendications précédentes, dans laquelle les secteurs (20) ont une forme tronconique ou une forme en pyramide tronquée à base polygonale.

10. Procédé de granulation pour produire de l'urée, comprenant les étapes consistant à : introduire une phase liquide d'urée en fusion au niveau d'une extrémité axiale supérieure (5) d'une tour de granulation (1) ; fournir de l'air au niveau d'une extrémité axiale inférieure (8) de la tour de granulation par des fenêtres (11) agencées au niveau de ladite extrémité axiale inférieure (8) ; mettre en contact la phase liquide en écoulement à contre-courant avec l'air pour solidifier la phase liquide et former des granulés ; collecter les granulés sur une structure de transport (9) placée au niveau de l'extrémité axiale inférieure (8) de la tour de granulation (1) au-dessous des fenêtres (11) ; le procédé étant **caractérisé en ce que** la structure de transport (9) comprend une pluralité de secteurs (20) évasés, coaxiaux et alignés les uns par rapport aux autres le long de l'axe (A) et agencés en série le long de l'axe (A) et convergeant vers l'axe (A) et vers une extrémité inférieure (15) de la structure de transport (9) prévue avec une sortie inférieure (12) ; la structure de transport (9) comprenant un secteur supérieur (20A) placé au niveau de l'extrémité supérieure (13) de la structure de transport (9), un secteur inférieur (20B) placé au niveau de l'extrémité inférieure (15) de la structure de transport (9), et au moins un secteur intermédiaire (20C) agencé entre le secteur supérieur (20A) et le secteur inférieur (20B) ; les secteurs (20) étant partiellement insérés les uns à l'intérieur des autres à la fois axialement et radialement, et chaque paire de secteurs (20) consécutive le long de l'axe (A) étant formée par deux secteurs (20) ayant des bords périphériques (21, 22) respectifs insérés l'un à l'intérieur de l'autre ; le secteur supérieur (20) de la paire, agencé au-dessus de l'autre le long de l'axe (A) ayant un bord inférieur périphérique (22) agencé au-dessous et radialement à l'intérieur d'un bord périphérique supérieur (21) du secteur (20) au-dessous ; les secteurs (20) ayant des surfaces latérales internes (29) respectives inclinées pour amener les granulés, déposés sur les surfaces latérales internes (29), à coulisser sous le seul effet de la gravité vers la sortie inférieure (12) ; les secteurs (20) ayant des parois latérales (30) respectives ayant une inclinaison par rapport à un plan horizontal supérieur à 45° ; et **en ce que** les granulés sont collectés sur lesdites surfaces latérales internes (29) des secteurs (20) et par conséquent coulissent sur ces dernières jusqu'à la sortie inférieure (12) sans l'aide de dispositifs de racloir mécanique.

11. Procédé de granulation selon la revendication 10, dans lequel chaque secteur (20) est séparé du secteur (20) suivant le long de l'axe (A) par un espace annulaire (27) qui définit une fente (25) et le procédé comprend une étape consistant à fournir un écoulement d'air supplémentaire par une ou plusieurs desdites fentes (25).

12. Procédé de granulation selon la revendication 11, dans lequel pour chaque paire de secteurs (20) consécutive le long de l'axe (A), l'espace (27) est délimité par une surface latérale externe (28) d'un secteur supérieur (20) de la paire et par une surface latérale interne (29) d'un secteur inférieur (20) de la paire, se faisant face et radialement espacées l'une de l'autre.

13. Procédé de granulation selon l'une des revendications 10 à 12, dans lequel les bords périphériques (21, 22) insérés les uns à l'intérieur des autres des deux secteurs (20) consécutifs ne sont pas en contact direct, mais sont axialement en quinconce et radialement espacés l'un de l'autre, afin de définir une fente annulaire (25) autour de l'axe (A) entre les deux secteurs (20) de la paire.

14. Procédé de granulation selon la revendication 13, dans lequel la fente (25) a une ouverture d'accès (26) qui est perpendiculaire à l'axe (A).

15. Procédé de granulation selon l'une des revendications 10 à 14, dans lequel les secteurs (20) ont des parois latérales (30) respectives placées autour de l'axe (A) et inclinées par rapport à l'axe (A) vers le bas et vers l'axe (A) ; et dans lequel toutes les parois latérales (30) des secteurs (20) ont la même inclinaison par rapport à l'axe (A) et à un plan horizontal perpendiculaire à l'axe (A).

16. Procédé de granulation selon l'une des revendications 10 à 15, dans lequel les secteurs (20) ont des parois latérales (30) respectives ayant une inclinaison par rapport à un plan horizontal supérieur à 50°, par exemple environ 55°.

17. Procédé de granulation selon l'une des revendications 10 à 16, dans lequel les secteurs (20) ont des parois latérales (30) respectives ayant une inclinaison par rapport à l'axe (A) compris entre environ 30° et environ 40°, par exemple environ 35°.

18. Procédé de granulation selon l'une des revendications 10 à 17, dans lequel les secteurs (20) ont une forme tronconique ou une forme de pyramide tronquée à base polygonale.
